# EUROPEAN PATENT APPLICATION

(11) **EP 4 321 551 A1**
(43) Date of publication of application: **14.02.2024**
(21) Application number: 22189448.8
(22) Date of filing: 09.08.2022
(51) Int. Cl.: C08G 18/22, C08G 18/38, C08G 18/73, C08G 18/79, C08L 75/02, C09D 175/02, C08G 18/08, C09D 7/20, E04F 15/00, B05D 5/00

(54) **EXTENDED WORK TIME POLYASPARTIC FLOOR COATING FORMULATIONS**

(71) Applicant: Covestro LLC, Pittsburgh, PA 15205-9741 (US)
(72) Inventor: The designation of the inventor has not yet been filed
(74) Representative: Levpat

(57) **Abstract**

A polyaspartic composition comprises a reaction product of a polyamine, a Michael addition receptor, and a polyisocyanate, wherein the reaction with the polyisocyanate is in the presence of a zirconium metal catalyst. The compositions of the present invention may be used in floor coatings, to provide an increased work time for large coating areas, while maintaining a relatively short walk on time, coating hardness and appearance.

## Description

### FIELD OF THE INVENTION

The present invention relates in general to floor coatings, and more specifically, to a polyaspartic floor coating having an extended work time, while maintaining a fast walk on time, hardness and appearance.

### BACKGROUND OF THE INVENTION

When applying a floor coating, especially a coating meant to cover a large area, flooring contractors desire a long work time, namely a coating that may be applied over a longer period of time before gelling, solidifying and curing as a coating. This allows the contractors to thoroughly and evenly apply the coating to an area, and applying the desired coating thickness. Another somewhat contradictory goal is to have that coating cure and harden in a relatively short period of time, such that a person may walk on that floor coating, without leaving a footprint, which would be an indication that the coating has not completely cured, and would then be left with an uneven appearance where the person had walked on it. However, when the cure time is slowed down to have a long work time, the walk on time is also typically longer. Conversely, when the coating is formulated to cure faster to have a desirably short walk on time, the work time is also typically shorter.

In addition, there are other properties to a coating that also make it desirable, including coating strength, or hardness, adhesion, abrasion resistance, UV resistance as well as the appearance of the coating. Thus, a need exists in the art for a polyaspartic coating formulation which would provide an increased work time for such large coating area applications, while maintaining other desirable properties such as a relatively short walk on time, coating hardness and appearance.

### SUMMARY OF THE INVENTION

In a first aspect, a polyaspartic composition comprises a reaction product of a polyamine, a Michael addition receptor, and a polyisocyanate, wherein the reaction with the polyisocyanate is in the presence of a zirconium metal catalyst.

The polyamine may be selected from ethylenediamine, 1,2-diaminopropane, 1,4-diaminobutane, 1,6-diaminohexane, 2,5-diamino-2,5-dimethylhexane, 2,2,4- and/or 2,4,4-trimethyl-1,6-diaminohexane, 1,11-diaminoundecane, 1,12-diaminododecane, 1-amino-3,3,5-trimethyl-5-aminomethylcyclohexane, 2,4- and/or 2,6-hexahydrotoluylenediamine, 2,4'- and/or 4,4'-diaminodicyclohexylmethane, 3,3'-dimethyl-4,4'-diaminodicyclohexylmethane, 2,4,4'-triamino-5-methyldicyclohexylmethane, and amine-terminated polyether polyols.

The Michael addition receptor may be selected from the group consisting of dimethyl maleate, diethyl maleate, dibutyl maleate, dimethyl fumarate, diethyl fumarate, dibutyl fumarate, acrylates, and combinations thereof.

The polyisocyanate may be selected from the group consisting of ethylene diisocyanate, 1,4-tetramethylene diisocyanate, 1,6-hexamethylene diisocyanate, 2,2,4-trimethyl-1,6-hexamethylene diisocyanate, 1,12-dodecamethylene diisocyanate, 1-isocyanato-3-isocyanatomethyl-3,5,5-trimethylcyclohexane, bis-(4-isocyanatocyclohexyl)methane (H12MDI), cyclohexane 1,4-diisocyanate, bis-(4-isocyanato-3-methyl-cyclohexyl)methane, pentane diisocyanate--bio-based, benzene diisocyanate, toluene diisocyanate, diphenylmethane diisocyanate, 4-isocyanatomethyl-1,8-octane diisocyanate, isomers of any thereof, and combinations of any thereof.

The zirconium metal catalyst may comprise an alkoxy or aryloxy constituent.

In another embodiment, the zirconium metal catalyst conforms to the formula: (RO-)ₙZr-(-O X R' Y)₄₋ₙ, where RO- is a hydrolysable group or substrate reactive group with surface hydroxyl or protons; X is a binder functional group such as phosphato, pyrophosphato, sulfonyl or carboxyl; R' is a thermoplastic functional group such as aliphatic and non-polar isopropyl, butyl, octyl, isostearoyl groups, naphthenic and mildly polar dodecylbenzyl groups, or aromatic benzyl, cumyl phenyl groups; Y is one or more thermoset functional groups such as acryl, methacryl, mercapto and amino; and n is an integer between 0 and 4.

In a different embodiment the zirconium metal catalyst comprises a phosphite or sulfite constituent.

In still another embodiment, the zirconium metal catalyst is selected from the group consisting of zirconium IV 2,2(bis-2-propenolatomethyl)butanolato, tris neodecanolato-O; zirconium IV 2.2(bis-2-propenolatomethyl)butanolato, tris(dodecyl)benzenesulfonato-O; zirconium IV 2,2(bis-2-propenolatomethyl)butanolato, tris(dioctyl)phosphato-O; zirconium IV 2,2(bis-2-propenolatomethyl) butanolato, tris 2-methyl-2-propenolato-O; zirconium IV 2,2(bis-2-propenolatomethyl)butanolato, tris(dioctyl)pyrophosphato-O; zirconium IV 2,2(bis-2-propenolato)butanolato, tris 2-propenoato-O; zirconium IV 2,2(bis-2-propenolatomethyl)butanolato, tris(2-ethylenediamino)ethylato; zirconium IV tetrakis (2,2-bis propenolato methyl) butanolato adduct with 2 moles bis tridecyl hydrogen phosphite; zirconium IV bis 2,2(bis-2-propenolatomethyl)butanolato, bis(para amino benzoato-O); zirconium IV bis 2,2(bis-2-propenolatomethyl)butanolato, bis(3-mercapto)propionato-O; zirconium IV 1,1(bis-2-propenolatomethyl)butanolato, tris(2-amino)phenylato; zirconium IV 2-ethyl, 2-propenolatomethyl 1, 3-propanediolato, cyclo di 2, 2-(bis 2-propenolatomethyl) butanolato pyrophosphato-O, O; zirconium IV bis 2-ethylhexanolato, cyclo(di 2-ethylhexyl)pyrophosphate; zirconium tetra-n-propanolate; and mixtures thereof.

In yet another embodiment, the zirconium metal catalyst is selected from the group consisting of zirconium IV 2,2(bis-2-propenolatomethyl)butanoloato, tris 2-methyl-2-propenolato-O; zirconium IV tetrakis (2,2-bis propenolato methyl) butanolato adduct with 2 moles bis tridecyl hydrogen phosphite; zirconium tetra-n-propanolate; and mixtures thereof.

A coating may comprise the polyaspartic composition, which may then be applied upon a substrate, which may be a floor. The substrate may be metal, plastic, wood, cement, concrete, or glass.

These and other advantages and benefits of the present invention will be apparent from the Detailed Description of the Invention herein below.

### DETAILED DESCRIPTION OF THE INVENTION

The present invention will now be described for purposes of illustration and not limitation.

As used herein, the term "polymer" encompasses prepolymers, oligomers and both homopolymers and copolymers; the prefix "poly" in this context referring to two or more. As used herein, the term "molecular weight", when used in reference to a polymer, refers to the number average molecular weight, unless otherwise specified.

As used herein, the term "coating composition" refers to a mixture of chemical components that will cure and form a coating when applied to a substrate.

"Cured," "cured composition" or "cured compound" refers to components and mixtures obtained from reactive curable original compound(s) or mixture(s) thereof which have undergone chemical and/or physical changes such that the original compound(s) or mixture(s) is(are) transformed into a solid, substantially non-flowing material. A typical curing process may involve crosslinking.

The term "curable" means that an original compound(s) or composition material(s) can be transformed into a solid, substantially non-flowing material by means of chemical reaction, crosslinking, radiation crosslinking, or the like. Thus, compositions of the invention are curable, but unless otherwise specified, the original compound(s) or composition material(s) is(are) not cured.

As used herein, the term "cure time" refers to the time to achieve Stage D (Method B) as defined in ASTM D5895-03 (2008) - *Standard Test Methods for Evaluating Drying or Curing During Film Formation of Organic Coatings Using Mechanical Recorder.*

As used herein, the term "polyamine" refers to compounds comprising at least two free primary and/or secondary amine groups. Polyamines include polymers comprising at least two pendant and/or terminal amine groups.

As used herein, the term "polyisocyanate" refers to compounds comprising at least two un-reacted isocyanate groups. Polyisocyanates include diisocyanates and diisocyanate reaction products comprising, for example, biuret, isocyanurate, uretdione, urethane, urea, iminooxadiazine dione, oxadiazine dione, carbodiimide, acyl urea, allophanate groups, and combinations of any thereof.

The coating compositions described herein may comprise a two-component coating composition. As used herein, the term "two-component" refers to a coating or coating composition comprising at least two components that must be stored in separate containers because of their mutual reactivity. For instance, two-component polyaspartic coating systems and compositions may comprise a hardener/crosslinker component comprising a polyisocyanate compound, and a separate binder component comprising a polyaspartic compound. The two separate components are generally not mixed until shortly before application. When the two separate components are mixed and applied as a film on a substrate, the mutually reactive compounds in the two components react to crosslink and form a cured coating film.

The polyisocyanate useful in the present invention may comprise any organic polyisocyanate having aliphatically, cycloaliphatically, araliphatically, and/or aromatically bound free isocyanate groups, which are liquid at room temperature or are dispersed in a solvent or solvent mixture at room temperature. In various non-limiting embodiments, the polyisocyanate may have a viscosity of from 10-15,000 mPa s at 23°C, 10-5,000 mPa s at 23°C, or 50-1,000 mPa s at 23°C. In certain embodiments, the polyisocyanate may comprise polyisocyanates or polyisocyanate mixtures having exclusively aliphatically and/or cycloaliphatically bound isocyanate groups with an (average) NCO functionality of 2.0-5.0 and a viscosity of from 10-5,000 mPa s at 23°C, 50-1,000 mPa s at 23°C, or 100-1,000 mPa s at 23°C.

In various embodiments, the polyisocyanate may comprise polyisocyanates or polyisocyanate mixtures based on one or more aliphatic or cycloaliphatic diisocyanates, such as, for example, ethylene diisocyanate; 1,4-tetramethylene diisocyanate; 1,6-hexamethylene diisocyanate (HDI); 2,2,4-trimethyl-1,6-hexamethylene diisocyanate; 1,12-dodecamethylene diisocyanate; 1-isocyanato-3-isocyanatomethyl-3,5,5-trimethyl-cyclohexane (isophorone diisocyanate or IPDI); bis-(4-isocyanatocyclohexyl)methane (H₁₂MDI); cyclohexane 1,4-diisocyanate; bis-(4-isocyanato-3-methyl-cyclohexyl)methane; PDI (pentane diisocyanate--bio-based) isomers of any thereof; or combinations of any thereof. In various embodiments, the polyisocyanate component may comprise polyisocyanates or polyisocyanate mixtures based on one or more aromatic diisocyanates, such as, for example, benzene diisocyanate; toluene diisocyanate (TDI); diphenylmethane diisocyanate (MDI); isomers of any thereof; or combinations of any thereof. In various embodiments, the polyisocyanate component may comprise a triisocyanate, such as, for example, 4-isocyanatomethyl-1,8-octane diisocyanate (triisocyanatononane or TIN); isomers thereof; or derivatives thereof.

Additional polyisocyanates (including various diisocyanates) that may also be included in the polyurea compositions of the present invention may include the polyisocyanates described in U.S. Pat. Nos. 5,075,370; 5,304,400; 5,252,696; 5,750,613; and 7,205,356. Combinations of any of the above-identified polyisocyanates may also be used.

The di- and tri-isocyanates indicated may be used as such, or as derivative polyisocyanates comprising biuret, isocyanurate, uretdione, urethane, urea, iminooxadiazine dione, oxadiazine trione, carbodiimide, acyl urea, and/or allophanate groups. In various non-limiting embodiments, derivative polyisocyanates comprising biuret, isocyanurate, uretdione, urethane, iminooxadiazine dione, oxadiazine trione, carbodiimide, acyl urea, and/or allophanate groups are included in the polyurea. In various embodiments, the polyisocyanate component comprises one or more of the above-identified structural groups prepared from IPDI, HDI, H₁₂MDI, and/or cyclohexane 1,4-diisocyanate.

The polyisocyanate may be hydrophilically-modified to be water-dispersible. Hydrophilically-modified water-dispersible polyisocyanates are obtainable, for example, by covalent modification with an internal emulsifier comprising anionic, cationic, or nonionic groups.

Polyether urethane type water-dispersible polyisocyanates may be formed, for example, from a reaction between polyisocyanates and less than stoichiometric amounts of monohydric polyalkylene oxide polyether alcohols. The preparation of such hydrophilically-modified polyisocyanates is described, for example, in U.S. Pat. No. 5,252,696. Polyether allophanate type water-dispersible polyisocyanates may be formed, for example, from a reaction between a polyalkylene oxide polyether alcohol and two polyisocyanate molecules under allophanation conditions. The preparation of such hydrophilically-modified polyisocyanates is described, for example, in U.S. Pat. No. 6,426,414. The polyalkylene oxide polyether alcohol used to prepare polyether type hydrophilically-modified water-dispersible polyisocyanates may comprise, for example, polyethylene oxide residues and/or polypropylene oxide residues.

Polyisocyanates may also be covalently modified with ionic or potentially ionic internal emulsifying groups to form hydrophilically-modified water-dispersible polyisocyanates. The ionic or potentially ionic groups may be cationic or anionic. As used herein, the term "ionic or potentially ionic group" refers to a chemical group that is nonionic under certain conditions and ionic under certain other conditions. For example, in various embodiments, the ionic group or potentially ionic group may comprise a carboxylic acid group; a carboxylate group; a sulfonic acid group; a sulfonate group; a phosphonic acid group; a phosphonate group; or combinations of any thereof. In this regard, for example, carboxylic acid groups, sulfonic acid groups, and phosphonic acid groups are potentially ionic groups, whereas, carboxylate groups, sulfonate groups, and phosphonate groups are ionic groups in the form of a salt, such as, for example, a sodium salt.

For example, carboxylate (carboxylic acid) groups, sulfonate (sulfonic acid) groups, or phosphonate (phosphonic acid) groups may be covalently introduced into polyisocyanates to form hydrophilically-modified water-dispersible polyisocyanates. The ionic or potentially ionic groups may be introduced through a reaction between the isocyanate groups of the polyisocyanate and less than stoichiometric amounts of amino-functional or hydroxy-functional carboxylic acids, sulfonic acids, phosphonic acids, or salts thereof. Examples include, but are not limited to dimethylolpropionic acid (DMPA), N-(2-aminoethyl)-2-aminoethane sulfonic acid (AAS); N-(2-aminoethyl)-2-aminopropionic acid; 2-(cyclohexyl-amino)-ethane sulfonic acid; 3-(cyclohexyl-amino)-1-propane sulfonic acid (CAPS); 2-aminoethylphosphonic acid; or the salts thereof.

If free carboxylic acids, sulfonic acids, or phosphonic acids are incorporated in the polyisocyanate, then the acids may be neutralized with a neutralizing agent, such as, for example, tertiary amines, including, but not limited to, trialkyl-substituted tertiary amines. The preparation of hydrophilically-modified water-dispersible polyisocyanates is described, for example, in U.S. Pat. No. 6,767,958. Water-dispersible polyisocyanate mixtures based on triisocyanatononane (TIN) are described in International Patent Application Publication No. WO01/62819.

The NCO content of nonionic type hydrophilically-modified water-dispersible polyisocyanates may be from 5 to 25 weight percent of the polyisocyanate molecule. The NCO content of ionic type hydrophilically-modified water-dispersible polyisocyanates may be from 4 to 26 weight percent of the polyisocyanate molecule.

As those skilled in the art are aware, a polyaspartic ester may be produced by reacting a polyamine with a Michael addition receptor, i.e., an electron withdrawing group such as cyano, keto or ester (an electrophile) in a Michael addition reaction. Examples of suitable Michael addition receptors include, but are not limited to, acrylates, and diesters such as dimethyl maleate, diethyl maleate, dibutyl maleate, dimethyl fumarate, diethyl fumarate, and dibutyl fumarate.

The polyaspartic composition may include one or more polyaspartic esters corresponding to formula (I): 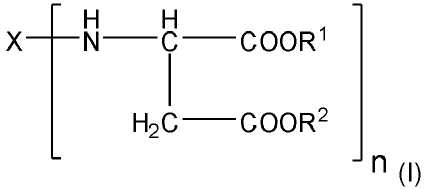 wherein:
n is an integer of 2 to 4
X represents an aliphatic residue;
R¹ and R² independently of each other represent organic groups that are inert to isocyanate groups under reaction conditions; and
n is at least 2.

In formula (I), the aliphatic residue X may correspond to a straight or branched alkyl and/or cycloalkyl residue of an n-valent polyamine that is reacted with a dialkylmaleate in a Michael addition reaction to produce a polyaspartic ester. For example, the residue X may correspond to an aliphatic residue from an n-valent polyamine including, but not limited to, ethylene diamine; 1,2-diaminopropane; 1,4-diaminobutane; 1,6-diaminohexane; 2,5-diamino-2,5-dimethylhexane; 2,2,4- and/or 2,4,4-trimethyl-1,6-diaminohexane; 1,11-diaminoundecane; 1,12-diaminododecane; 1-amino-3,3,5-trimethyl-5-amino-methylcyclohexane; 2,4'- and/or 4,4'-diaminodicyclohexylmethane; 3,3'-dimethyl-4,4'-diaminodicyclohexylmethane; 2,4,4'-triamino-5-methyldicyclohexylmethane; polyether polyamines with aliphatically bound primary amino groups and having a number average molecular weight (Mₙ) of 148 to 6000 g/mol; isomers of any thereof, and combinations of any thereof.

In various embodiments, the residue X may be obtained from 1,4-diaminobutane; 1,6-diaminohexane; 2,2,4- and/or 2,4,4-trimethyl-1,6-diaminohexane; 1-amino-3,3,5-trimethyl-5-aminomethylcyclohexane; 4,4'-diaminodicyclohexylmethane; 3,3'-dimethyl-4,4'-diaminodicyclohexylmethane; or 1,5-diamine-2-methyl-pentane.

Polyamines useful in the invention may include amine-terminated polyether polyols (i.e., polyether polyamines), such as primary and secondary amine-terminated polyether polyols of greater than 1,500 average molecular weight having in various embodiments, from about 2 to about 6 functionality, in certain embodiments, from about 2 to about 3, and an amine equivalent weight of from about 750 to about 4,000. In some embodiments, mixtures of amine-terminated polyethers may be used. In certain embodiments, the amine-terminated polyethers have an average molecular weight of at least about 2,500. These materials may be made by various methods known in the art.

The amine-terminated polyethers useful in this invention are, for example, polyethers made from an appropriate initiator to which lower alkylene oxides, such as ethylene oxide, propylene oxide, butylene oxide, or mixtures thereof, are added with the resulting hydroxyl terminated polyol then being aminated. When two or more oxides are used, they may be present as random mixtures or as blocks of one or the other polyether. In the amination step, it is highly desirable that the terminal hydroxyl groups in the polyol be essentially all secondary hydroxyl groups for ease of amination. Normally, the amination step does not completely replace all of the hydroxyl groups. However, the majority of hydroxyl groups are replaced by amine groups. Therefore, in some embodiments, the amine-terminated polyethers have greater than 50 percent of their active hydrogens in the form of amine hydrogens. If ethylene oxide is used, it is desirable to cap the hydroxyl terminated polyol with a small amount of higher alkylene oxide to insure that the terminal hydroxyl groups are essentially all secondary hydroxyl groups. The polyols so prepared are then reductively aminated by known techniques, for example, as described in U.S. Pat. No. 3,654,370.

In some embodiments of the invention, a single high molecular weight amine-terminated polyol may be used. Also, mixtures of high molecular weight amine-terminated polyols, such as mixtures of di- and trifunctional materials and/or different molecular weight or different chemical composition materials, may be used.

Also, high molecular weight amine-terminated polyethers or simply polyether amines are included within the scope of this invention and may be used alone or in combination with the aforementioned polyols. The term "high molecular weight" is intended to include polyether amines having a molecular weight of at least about 2,000. Particularly preferred are the JEFFAMINE series of polyether amines available from Texaco Chemical Company; they include JEFFAMINE D-2000, JEFFAMINE D-4000, JEFFAMINE T-3000 and JEFFAMINE T-5000.

The phrase "inert to isocyanate groups under reaction conditions," which is used to define groups R¹ and R² in formula (I), means that these groups do not have Zerevitinov-active hydrogens. Zerevitinov-active hydrogen is defined in *Rompp's Chemical Dictionary* (Rommp Chemie Lexikon), 10^{th} ed., Georg Thieme Verlag Stuttgart, 1996. Generally, groups with Zerevitinov-active hydrogen are understood in the art to mean hydroxyl (OH), amino (NHₓ), and thiol (SH) groups. In various embodiments, R¹ and R², independently of one another, are C₁ to C₁₀ alkyl residues, such as, for example, methyl, ethyl, or butyl residues.

In various embodiments, the polyaspartic composition comprises one or more compounds corresponding to formula (I) in which n is an integer from 2 to 6, in some embodiments from 2 to 4, and in some embodiments 2. In embodiments, where n=2, the polyaspartic composition may comprise one or more compounds corresponding to formula (II):

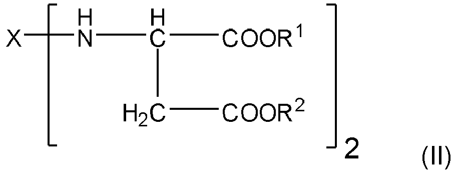

The polyaspartic composition may be produced by reacting the corresponding primary polyamines of the formula: 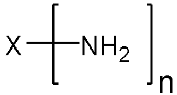 with a diester of the formula:

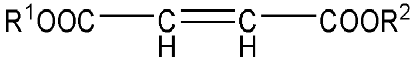

The production of the inventive polyaspartic composition from the above-mentioned polyamine and Michael addition receptor starting materials may take place within a temperature range of 0°C to 100°C, in certain embodiments, the temperature is no greater than 45°C.

The catalysts suitable for producing the inventive polyaspartic compositions comprise phenolic compounds other than sterically hindered phenols which are substituted with tert-butyl groups in both ortho positions to the oxygen. Such compounds have at least one hydroxy group attached to a carbon atom of a benzene ring. Examples of phenolic compounds useful as catalysts in the present invention include, but are not limited to, phenol, catechol, 1,4-benzenediol, cashew nut oil (anacardic acids, cardol, and cardanol), phenolic aldehydes (vanillin, 2-methoxy phenol), resorcinol, tris-2,4,6-(dimethyl aminomethyl)phenol, 4-ethylresorcinol, 2,5-dimethylresorcinol, phloroglucinol, 2-nitrophloro-glucinol, 5-methoxyresorcinol, orcinol, 2-methylresorcinol, 4-bromoresorcinol, 4-chlororesorcinol, 4,6-dichlororesorcinol, 3,5-dihydroxy-benzaldehyde, 2,4-dihydroxy-benzaldehyde, methyl 3,5-dihydroxy benzoate, methyl 2,4-dihydroxybenzoate, 1,2,4-benzenetriol, pyrogallol, 3,5-dihydroxybenzyl alcohol, 2',6'-dihydroxyacetophenone, 2',4'-dihydroxyacetophenone, 3',5'-dihydroxyacetophenone, 2',4'-dihydroxypropiophenone, 2',4'-dihydroxy-3'-methylacetophenone, 2,4,5-trihydroxybenzaldehyde, 2,3,4-trihydroxybenzaldehyde, 2,4,6-trihydroxybenzaldehyde, 3,5-dihydroxybenzoic acid, 2,4-dihydroxybenzoic acid, 2,6-dihydroxybenzoic acid, 2-nitroresorcinol, 1,3-dihydroxynaphthalene, hydroquinone, methylhydroquinone, 2,3-dimethylhydroquinone, 2-methoxyhydroquinone, chlorohydroquinone, 2',5'-dihydroxyacetophenone, 2-isopropyl-1,4-benzenediol, 2,5-dihydroxybenzoic acid, 2,3-dicyanohydroquinone, 1,4-dihydroxynaphthalene, 2',5'-dihydroxypropiophenone, 1-(2,5-dihydroxy-4-methylphenyl)ethanone, tert-butylhydroquinone, methyl 2,5-dihydroxybenzoate, (2,5-dihydroxyphenyl)acetic acid, 2,4,5-trihydroxybenzoic acid, 4,7-dihydroxy-3-methyl-1-indanone, 2,5-dichlorohydroquinone, tetrafluorohydroquinone, ethyl 2,5-dihydroxybenzoate, 2-(2,5-dihydroxybenzylidene)malononitrile, 2-bromo-1,4-benzenediol, ethyl(2,5-dihydroxyphenyl)acetate, 1-(2,4,5-trihydroxyphenyl)-1-butanone, methyl 2,5-dihydroxy-4-methoxybenzoate, 2,6-dinitro-1,4-benzenediol, 2,4,5-trihydroxyphenylalanine, (2,5-dihydroxyphenyl)-(phenyl)methanone, 2,5-ditert-butyl-1,4-benzenediol, 2-(6-methylheptyl)-1,4-benzenediol, 2-(1,1,3,3-tetramethylbutyl)-1,4-benzenediol, dimethyl 2,5-dihydroxyterephthalate, 2,4,5-trichloro-3,6-dihydroxybenzonitrile, 2,5-ditert-pentyl-1,4-benzenediol, 2,5-dibromo-1,4-benzenediol, dimethyl 2,4-diethyl-3,6-dihydroxy-phenylphosphonate, pyrocatechol, 2,3-naphthalenediol, 5-methyl-1,2,3-benzenetriol, 4-methylcatechol, 3-methylcatechol, 3-fluorocatechol, 3-methoxycatechol, 4-chlorocatechol, 4,5-dichlorocatechol, 4-tert-butylcatechol, 3,4,5,6-tetrachloro-1,2-benzenediol, 3-isopropyl-6-methylcatechol, 3-tert-butyl-6-methylcatechol, 3,4-dihydroxybenzonitrile, 3,5-ditert-butylcatechol, 3,5-diisopropylcatechol, 3,4-dihydroxybenzaldehyde, 4-(1,1,3,3-tetramethylbutyl)-1,2-benzenediol, 4-(1,2-dihydroxyethyl)-1,2-benzenediol, 1-(3,4-dihydroxyphenyl)ethanone, 3,4-dihydroxybenzoic acid, 3,4,5-trihydroxybenzamide, 4-nitro-1,2-benzenediol, 4-(2-amino-1-hydroxyethyl)-1,2-benzenediol, 5-methyl-3-(1,1,3,3-tetramethylbutyl)-1,2-benzenediol, (3,4-dihydroxyphenyl)acetic acid, 2-(3,4-dihydroxybenzyl-idene)malononitrile, 3,5-dinitro-1,2-benzenediol, methyl 3,4-dihydroxybenzoate, 2-chloro-1-(3,4-dihydroxyphenyl)ethanone, phenyl(2,3,4-trihydroxyphenyl)methanone, isopropyl 3,4,5-trihydroxybenzoate, 3,4-dihydroxy-2-methylphenylalanine, 3-bromo-4,5-dihydroxybenzoic acid, 2-(3,4-dihydroxy-5-methoxybenzylidene)malononitrile, ethyl 3-(3,4-dihydroxyphenyl)propanoate, 2-phenyl-1-(2,3,4-trihydroxy-phenyl)ethanone, and 3,4,5-trihydroxy-N-(2-hydroxyethyl)benzamide.

In various embodiments, the phenolic catalysts may be used in the coating, adhesive, sealant, composite, casting, and film formulations in amount ranging from 1 ppm to 12,000 ppm, in certain embodiments from 10 ppm to 500 ppm and in selected embodiments from 20 ppm to 200 ppm.

In addition, a metal catalyst may be used. While the metal component may be based on a variety of metals, including tin, titanium and zirconium, it has been discovered that zirconium is preferable. In addition, the catalyst may react like a water scavenger, and preferably comprises one or more constituents that may assist the metal catalyst in acting like a water scavenger, such as alkoxy (C₁₋₄-alkoxy such as methoxy, ethoxy, n-propoxy, iso-propoxy, n-butoxy, iso-butoxy, sec-butoxy, tert. butoxy), and aryloxy (especially C₆₋₁₀-aryloxy, for example phenoxy or cresoxy). In another embodiment, the metal catalyst may conform to the formula: (RO-)ₙZr-(-O X R' Y)₄₋ₙ, where RO- is a hydrolysable group or substrate reactive group with surface hydroxyl or protons; X is a binder functional group such as phosphato, pyrophosphato, sulfonyl or carboxyl; R' is a thermoplastic functional group such as aliphatic and non-polar isopropyl, butyl, octyl, isostearoyl groups, naphthenic and mildly polar dodecylbenzyl groups, or aromatic benzyl, cumyl phenyl groups; Y is one or more thermoset functional groups such as acryl, methacryl, mercapto and amino; and n is an integer between 0 and 4.

An alcohol may be formed from a constituent in the catalyst, which could have a negative effect on the coatings hardness or strength. This would be more pronounced in thicker coatings. The alcohol could then also act like a catalyst and increase the cure rate of the coating. The metal catalyst may also include other constituents besides alkoxy, such as a phosphite or a sulfite constituent. Release of these constituents, or a reaction product of these constituents with water, into the coating may not be as detrimental to the coating as production of the alcohol. While not wishing to be bound by theory, it is believed that these catalyst compounds either react with trace water present in the aspartic ester amine resin, or otherwise remove moisture that may be present as humidity in the ambient air and absorbed by the coating during cure, such as to reduce the water available to promote the cure of the coating. With water removed from the coating as fast as it is absorbed from the atmosphere or substrate, or latent water in the resin made unavailable, the curing reaction is believed to slow down.

The catalyst may also promote the reaction of NCO with water and cause gases to appear, which would show up as tiny bubbles in the coating, distorting the coating's appearance. Catalysts with too much of these side reactions are preferably avoided, and are known by if their presence diminishes the hardness, strength, or the appearance of the coating. Catalysts with different constituents that have different mechanisms to scavenge water may be preferred, to reduce the effect of such side reactions.

It is preferable that the metal catalyst added does not negatively affect the stability of the resin during storage. It is preferred that the storage of the catalyst with the aspartic ester amine should not appreciable affect the work time or the walk on time of the formulation. This is typically tested by storing the resin in the presence of the catalyst at an elevated temperature (50 C) for 4 weeks.

Specific examples of metal catalysts include zirconium IV 2,2(bis-2-propenolatomethyl)butanolato, tris neodecanolato-O; zirconium IV 2.2(bis-2-propenolatomethyl)butanolato, tris(dodecyl)benzenesulfonato-O; zirconium IV 2,2(bis-2-propenolatomethyl)butanolato, tris(dioctyl)phosphato-O; zirconium IV 2,2(bis-2-propenolatomethyl) butanolato, tris 2-methyl-2-propenolato-O; zirconium IV 2,2(bis-2-propenolatomethyl)butanolato, tris(dioctyl)pyrophosphato-O; zirconium IV 2,2(bis-2-propenolato)butanolato, tris 2-propenoato-O; zirconium IV 2,2(bis-2-propenolatomethyl)butanolato, tris(2-ethylenediamino)ethylato; zirconium IV tetrakis (2,2-bis propenolato methyl) butanolato adduct with 2 moles bis tridecyl hydrogen phosphite; zirconium IV bis 2,2(bis-2-propenolatomethyl)butanolato, bis(para amino benzoato-O); zirconium IV bis 2,2(bis-2-propenolatomethyl)butanolato, bis(3-mercapto)propionato-O; zirconium IV 1,1(bis-2-propenolatomethyl)butanolato, tris(2-amino)phenylato; zirconium IV 2-ethyl, 2-propenolatomethyl 1, 3-propanediolato, cyclo di 2, 2-(bis 2-propenolatomethyl) butanolato pyrophosphato-O, O; zirconium IV bis 2-ethylhexanolato, cyclo(di 2-ethylhexyl)pyrophosphato and zirconium tetra-n-propanolate, in addition to the catalysts listed in the examples. Of the examples given above, zirconium IV 2,2(bis-2-propenolatomethyl) butanolato, tris 2-methyl-2-propenolato-O, zirconium IV tetrakis (2,2-bis propenolato methyl) butanolato adduct with 2 moles bis tridecyl hydrogen phosphite and zirconium tetra-n-propanolate, or a combination of those, are preferred metal catalysts.

The metal catalyst preferably comprises 0.0001 to 1% by weight of the coating composition.

As mentioned herein, the inventive polyaspartic compositions may be combined with a polyisocyanate to produce polyurea compositions. The inventive polyurea compositions may be applied to a substrate in the form of a coating composition by conventional methods such as painting, rolling, pouring or spraying. Suitable substrates include, but are not limited to, metals, plastics, wood, cement, concrete and glass. The substrates to be coated by the polyurea coating composition according to the invention optionally may be treated with suitable primers.

The inventive coatings, adhesives, sealants, composites, castings, and films optionally may contain additives such as fillers, pigments, softeners, high-boiling liquids, catalysts, UV stabilizers, anti-oxidants, microbiocides, algicides, dehydrators, thixotropic agents, wetting agents, flow enhancers, matting agents, antislip agents, aerators, and extenders.

Although the present invention is described and exemplified in the instant Specification in the context of a polyurea coating composition, the invention is not intended to be so limited. The principles of the invention are equally applicable to polyurethane, polyurea, polyurethane/urea coatings, adhesives, sealants, composites, castings, and films.

### EXAMPLES

The non-limiting and non-exhaustive examples that follow are intended to further describe various non-limiting and non-exhaustive embodiments without restricting the scope of the embodiments described in this specification.

The following materials were used in preparation of the Examples. All quantities given in "parts" and "percents" are understood to be by weight, unless otherwise indicated.

| | |
|---|---|
| POLYASPARTIC A | a 100% solids content aspartic ester functional amine, having an amine number of approx. 191 mg KOH/g, viscosity @ 25°C of 1400 mPa•s, commercially available from Covestro LLC, Pittsburgh, Pennsylvania, as DESMOPHEN NH 1520; |
| POLYASPARTIC B | a 100% solids content aspartic ester functional amine, having an amine number of approx. 201 mgKOH/g, viscosity @ 25°C of 1450 mPa•s, commercially available from Covestro LLC, Pittsburgh, Pennsylvania, as DESMOPHEN NH 1420; |
| ISOCYANATE A | an aliphatic polyisocyanate resin based on hexamethylene diisocyanate, NCO content 23.5 ± 0.5%, viscosity 730 ± 100 mPa·s @ 23°C, commercially available from Covestro LLC, Pittsburgh, Pennsylvania, as DESMODUR N3900; |
| ADDITIVE A | t-butyl acetate, commercially available from Aldrich |
| CATALYST A | Tyzor TnBT, Ti (O-n-butyl)₄, available from Dorf Ketal; |
| CATALYST B | Ken-react NZ33, zirconium IV 2,2(bis-2-propenolatomethyl)butanoloato, tris 2-methyl-2-propenolato-O, available from Kenrich Petroleum Co.; |
| CATALYST C | Ken-react KZ 55, zirconium IV tetrakis (2,2-bis propenolato methyl) butanolato, adduct with 2 moles bis tridecyl hydrogen phosphite, available from Kenrich Petroleum Co.; |
| CATALYST D | Ken-react Lica 38, titanium IV 2,2(bis 2-propenolatomethyl) butanolato, tris (dioctyl) pyrophosphato-O, available from Kenrich Petroleum Co.; |
| CATALYST E | Tyzor TOT, titanium tetrakis (2-ethylhexanolate), available from Dorf Ketal.; |
| CATALYST F | Ken-react Lica 44, titanium IV 2,2(bis 2-propenolatomethyl), tris 2-ethylenediamino) ethylato, available from Kenrich Petroleum Co.; |
| CATALYST G | Tyzor BTP, polymeric butyl titanate, available from Dorf Ketal; |
| CATALYST H | Ken-react KRTTS, titanium IV 2-propanolato, tris isoctadecanoato-O, available from Kenrich Petroleum Co.; |
| CATALYST I | Tyzor CLA, titanate with triethanolamine and acetylacetone as chelating agents, available from Dorf Ketal; |
| CATALYST J | Tyzor TPT, titanium tetra-n-propanolate, available from Dorf Ketal; |
| CATALYST K | Tyzor NPZ, zirconium tetra-n-propanolate, available from Dorf Ketal; |
| CATALYST L | Tyzor IBAY, titanium bis(ethyl 3-oxobutanoato-O1',O3) bis(2-methyl-1-propanolato), available from Dorf Ketal; |
| CATALYST M | Tyzor PITA, titanium ethyl acetoacetate complex, |
| | available from Dorf Ketal; |
| CATALYST N | Ken-react Lica 38ENP, titanium IV 2,2(bis 2-propenolatomethyl) butanolato, tris (dioctyl) pyrophosphato-O: ethoxylated nonyl phenol 1:1, available from Kenrich Petroleum Co. |

The materials were used as received except for the tert-butyl acetate, which was dried over activated molecular sieves. The solvent additive was decanted from a top of the molecular sieves. Coating compositions were created, with the amounts listed in Table 1. The isocyanate component was added just before the coating was applied. A control composition was created, that did not have any metal catalyst. The compositions are referred to herein as control, example A (made with Catalyst A) example B (made with Catalyst B) and so forth.

**Table I**

| **Component** | **control** | **examples A-N** |
|---|---|---|
| POLYASPARTIC A | 37.37 | 37.37 |
| POLYASPARTIC B | 20.10 | 20.10 |
| ADDITIVE A | 4.41 | 4.41 |
| CATALYST | | 0.07 |
| ISOCYANATE A | 38.16 | 38.16 |

Glass panels for appearance testing and pendulum hardness were cleaned with Windex^{®} and wiped dry with a paper towel. The panels were then rinsed with acetone or methyl ethyl ketone (MEK) and wiped dry with a clean towel paper. Masonite^{®} boards were wiped with a tack cloth, and sealed with a standard polyaspartic coating formulation.

The polyaspartic coatings were prepared by placing the polyaspartics, the solvent additive, and the metal catalyst in a Flacktek SpeedMixer^{®} cup. The resins were blend until homogeneous at 2000 revolutions per minute in a Flacktek SpeedMixer^{®}. The remaining portion of the mixing and application was performed in a constant temperature (25°C)/constant humidity (50 % relative humidity) room. The polyaspartic blend was added to a glass jar. The polyisocyanate was then added and the mixture was stirred with a glass rod for 30 s. Viscosity versus time was measured with a Brookfield viscometer. Coating of the substrates was either performed with a drawdown bar or a metric 7.62 cm (3 inch) wide roller. An application of 0.203 mm (8 mils) wet coating thickness was targeted.

Work time was tested by applying the formulation to a prepped Masonite^{®} board with a roller. A strip was applied approximately 12.7 cm (5 inches) wide. Every five minutes another 12.7 cm (5 inch) strip was applied overlapping the two coating edges. When the wet edges no longer blended together (as observed after cure), the work time was achieved. Or stated more succinctly, when the lap line flowing back (LLFB) stopped and appeared as a line in the cured coating work time had been surpassed.

Walk on time was tested by applying 0.203 mm (8 mils) of the coating onto a Masonite^{®} board. A 91 KG (200 lb.) individual stepped onto the board at timed intervals. Each step was on an untested section of coating. Walk on time was achieved when no mark or impression was left on the coating after cure.

Work time and walk on time were performed in a temperature and humidity controlled room or a Thermatron in the same room.

Testing of the cured samples was performed according to the ASTM methods listed in Table 2.

Coatings of 10 mil (0.254 mm) and 20 mil (0.508 mm) were made upon the glass panels, and were then allowed to cure in a constant temperature/constant humidity room for at least seven days, before the following physical testing. For appearance, each of the coatings were inspected after curing, to see if any bubbles were present within the coating. For hardness testing samples were poured into a ¼ inch aluminum mold, ASTM D 2240 was followed, using a Byk Gardner instrument. In addition, the tensile strength was tested by ASTM D 412.

**Table II**

| **Composition** | **10 mil bubbles** | **20 mil bubbles** | **Tensile Strength (psi)** | **Hardness** | **Work time (min)** | **Walk on time (hrs)** |
|---|---|---|---|---|---|---|
| Control | No | No | 6753 | 79/77 | 10-15 | 8 |
| Example A | No | Yes | 6443 | 80/78 | 25 | 7 |
| Example B | No | No | 4703 | 74/70 | 20 | 6 |
| Example C | No | Tiny | 6913 | 80/78 | 20 | 7 |
| Example D | No | Few | 1953 | 60/50 | 20-25 | 6 |
| Example E | No | Slight | 6697 | 78/75 | | |
| Example F | No | Few | 4497 | 80/78 | | |
| Example G | No | Slight | 6673 | 79/77 | | |
| Example H | No | No | 5840 | 77/75 | 15 | 6 |
| Example I | No | Few | 6823 | 81/79 | | |
| Example J | No | Few | 5413 | 79/77 | | |
| Example K | No | Tiny | 6277 | 80/78 | | |
| Example L | No | Yes | 6823 | 80/78 | | |
| Example M | No | Yes | 5637 | 79/77 | | |
| Example N | No | | 5550 | 78/76 | 25 | |

As shown by the above examples, the compositions using zirconium metal catalysts performed best, by their improved work time, while still maintaining a sufficiently low walk on time. In addition, they proved to have either no or very tiny bubbles in appearance, while maintaining high strength, as shown by the hardness testing, and confirmed by the tensile strength. In addition, it was discovered that catalysts comprising both zirconium metal and a phosphite or sulfite, in addition to another constituent, was further preferable, in achieving high strength and hardness, while minimizing bubbles, and also getting the benefits of a longer work time and a relatively short walk on time.

Various aspects of the subject matter described herein are set out in the following numbered Clauses:
Clause 1. A polyaspartic composition comprising a reaction product of a polyamine, a Michael addition receptor, and a polyisocyanate, wherein the reaction with the polyisocyanate is in the presence of a zirconium metal catalyst.
Clause 2. The polyaspartic composition of 1, wherein the polyamine is selected from ethylenediamine, 1,2-diaminopropane, 1,4-diaminobutane, 1,6-diaminohexane, 2,5-diamino-2,5-dimethylhexane, 2,2,4- and/or 2,4,4-trimethyl-1,6-diaminohexane, 1,11-diaminoundecane, 1,12-diaminododecane, 1-amino-3,3,5-trimethyl-5-aminomethylcyclohexane, 2,4- and/or 2,6-hexahydrotoluylenediamine, 2,4'- and/or 4,4'-diaminodicyclohexylmethane, 3,3'-dimethyl-4,4'-diaminodicyclohexylmethane, 2,4,4'-triamino-5-methyldicyclohexylmethane, and amine-terminated polyether polyols.
Clause 3. The polyaspartic composition of 1 or 2, wherein the Michael addition receptor is selected from the group consisting of dimethyl maleate, diethyl maleate, dibutyl maleate, dimethyl fumarate, diethyl fumarate, dibutyl fumarate, acrylates, and combinations thereof.
Clause 4. The polyaspartic composition of any of 1-3, wherein the polyisocyanate is selected from the group consisting of ethylene diisocyanate, 1,4-tetramethylene diisocyanate, 1,6-hexamethylene diisocyanate, 2,2,4-trimethyl-1,6-hexamethylene diisocyanate, 1,12-dodecamethylene diisocyanate, 1-isocyanato-3-isocyanatomethyl-3,5,5-trimethyl-cyclohexane, bis-(4-isocyanatocyclohexyl)methane (H12MDI), cyclohexane 1,4-diisocyanate, bis-(4-isocyanato-3-methylcyclohexyl)methane, pentane diisocyanate--bio-based, benzene diisocyanate, toluene diisocyanate, diphenylmethane diisocyanate, 4-isocyanatomethyl-1,8-octane diisocyanate, isomers of any thereof, and combinations of any thereof.
Clause 5. The polyaspartic composition of any of 1-4, wherein the zirconium metal catalyst comprises an alkoxy or aryloxy constituent.
Clause 6. The polyaspartic composition of any of 1-5, wherein the zirconium metal catalyst conforms to the formula: (RO-)n Zr-(-O X R' Y)4-n, where RO- is a hydrolysable group or substrate reactive group with surface hydroxyl or protons; X is a binder functional group such as phosphato, pyrophosphato, sulfonyl or carboxyl; R' is a thermoplastic functional group such as aliphatic and non-polar isopropyl, butyl, octyl, isostearoyl groups, naphthenic and mildly polar dodecylbenzyl groups, or aromatic benzyl, cumyl phenyl groups; Y is one or more thermoset functional groups such as acryl, methacryl, mercapto and amino; and n is an integer between 0 and 4.
Clause 7. The polyaspartic composition of any of 1-6, wherein the zirconium metal catalyst comprises a phosphite or sulfite constituent.
Clause 8. The polyaspartic composition of any of 1-7, wherein the zirconium metal catalyst is selected from the group consisting of zirconium IV 2,2(bis-2-propenolatomethyl)butanolato, tris neodecanolato-O; zirconium IV 2.2(bis-2-propenolatomethyl)butanolato, tris(dodecyl)benzenesulfonato-O; zirconium IV 2,2(bis-2-propenolatomethyl)butanolato, tris(dioctyl)phosphato-O; zirconium IV 2,2(bis-2-propenolatomethyl) butanolato, tris 2-methyl-2-propenolato-O; zirconium IV 2,2(bis-2-propenolatomethyl)butanolato, tris(dioctyl)pyrophosphato-O; zirconium IV 2,2(bis-2-propenolato)butanolato, tris 2-propenoato-O; zirconium IV 2,2(bis-2-propenolatomethyl)butanolato, tris(2-ethylenediamino)ethylato; zirconium IV tetrakis (2,2-bis propenolato methyl) butanolato adduct with 2 moles bis tridecyl hydrogen phosphite; zirconium IV bis 2,2(bis-2-propenolatomethyl)butanolato, bis(para amino benzoato-O); zirconium IV bis 2,2(bis-2-propenolatomethyl)butanolato, bis(3-mercapto)propionato-O; zirconium IV 1,1(bis-2-propenolatomethyl)butanolato, tris(2-amino)phenylato; zirconium IV 2-ethyl, 2-propenolatomethyl 1, 3-propanediolato, cyclo di 2, 2-(bis 2-propenolatomethyl) butanolato pyrophosphato-O, O; zirconium IV bis 2-ethylhexanolato, cyclo(di 2-ethylhexyl)pyrophosphate; zirconium tetra-n-propanolate; and mixtures thereof.
Clause 9. The polyaspartic composition of any of 1-8, wherein the zirconium metal catalyst is selected from the group consisting of zirconium IV 2,2(bis-2-propenolatomethyl)butanoloato, tris 2-methyl-2-propenolato-O; zirconium IV tetrakis (2,2-bis propenolato methyl) butanolato adduct with 2 moles bis tridecyl hydrogen phosphite; zirconium tetra-n-propanolate; and mixtures thereof.
Clause 10. A coating comprising the polyaspartic composition of any of 1-9.
Clause 11. A substrate having applied thereto the coating of 10.
Clause 12. The substrate of 11, wherein the substrate is selected from the group consisting of metal, plastic, wood, cement, concrete, and glass.
Clause 13. The substrate of 11 or 12, wherein the substrate is a floor.

## Claims

1. A polyaspartic composition comprising a reaction product of a polyamine, a Michael addition receptor, and a polyisocyanate, wherein the reaction with the polyisocyanate is in the presence of a zirconium metal catalyst.

2. The polyaspartic composition of claim 1, wherein the polyamine is selected from ethylenediamine, 1,2-diaminopropane, 1,4-diaminobutane, 1,6-diaminohexane, 2,5-diamino-2,5-dimethylhexane, 2,2,4- and/or 2,4,4-trimethyl-1,6-diaminohexane, 1,11-diaminoundecane, 1,12-diaminododecane, 1-amino-3,3,5-trimethyl-5-aminomethylcyclohexane, 2,4- and/or 2,6-hexahydrotoluylenediamine, 2,4'- and/or 4,4'-diaminodicyclohexylmethane, 3,3'-dimethyl-4,4'-diaminodicyclohexylmethane, 2,4,4'-triamino-5-methyldicyclohexylmethane, and amine-terminated polyether polyols.

3. The polyaspartic composition of claim 1, wherein the Michael addition receptor is selected from the group consisting of dimethyl maleate, diethyl maleate, dibutyl maleate, dimethyl fumarate, diethyl fumarate, dibutyl fumarate, acrylates, and combinations thereof.

4. The polyaspartic composition of claim 1, wherein the polyisocyanate is selected from the group consisting of ethylene diisocyanate, 1,4-tetramethylene diisocyanate, 1,6-hexamethylene diisocyanate, 2,2,4-trimethyl-1,6-hexamethylene diisocyanate, 1,12-dodecamethylene diisocyanate, 1-isocyanato-3-isocyanatomethyl-3,5,5-trimethyl-cyclohexane, bis-(4-isocyanatocyclohexyl)methane (H₁₂MDI), cyclohexane 1,4-diisocyanate, bis-(4-isocyanato-3-methylcyclohexyl)methane, pentane diisocyanate--bio-based, benzene diisocyanate, toluene diisocyanate, diphenylmethane diisocyanate, 4-isocyanatomethyl-1,8-octane diisocyanate, isomers of any thereof, and combinations of any thereof.

5. The polyaspartic composition of claim 1, wherein the zirconium metal catalyst comprises an alkoxy or aryloxy constituent.

6. The polyaspartic composition of claim 1, wherein the zirconium metal catalyst conforms to the formula: (RO-)ₙZr-(-O X R' Y)₄₋ₙ, where RO- is a hydrolysable group or substrate reactive group with surface hydroxyl or protons; X is a binder functional group such as phosphato, pyrophosphato, sulfonyl or carboxyl; R' is a thermoplastic functional group such as aliphatic and non-polar isopropyl, butyl, octyl, isostearoyl groups, naphthenic and mildly polar dodecylbenzyl groups, or aromatic benzyl, cumyl phenyl groups; Y is one or more thermoset functional groups such as acryl, methacryl, mercapto and amino; and n is an integer between 0 and 4.

7. The polyaspartic composition of claim 1, wherein the zirconium metal catalyst comprises a phosphite or sulfite constituent.

8. The polyaspartic composition of claim 1, wherein the zirconium metal catalyst is selected from the group consisting of zirconium IV 2,2(bis-2-propenolatomethyl)butanolato, tris neodecanolato-O; zirconium IV 2.2(bis-2-propenolatomethyl)butanolato, tris(dodecyl)benzenesulfonato-O; zirconium IV 2,2(bis-2-propenolatomethyl)butanolato, tris(dioctyl)phosphato-O; zirconium IV 2,2(bis-2-propenolatomethyl) butanolato, tris 2-methyl-2-propenolato-O; zirconium IV 2,2(bis-2-propenolatomethyl)butanolato, tris(dioctyl)pyrophosphato-O; zirconium IV 2,2(bis-2-propenolato)butanolato, tris 2-propenoato-O; zirconium IV 2,2(bis-2-propenolatomethyl)butanolato, tris(2-ethylenediamino)ethylato; zirconium IV tetrakis (2,2-bis propenolato methyl) butanolato adduct with 2 moles bis tridecyl hydrogen phosphite; zirconium IV bis 2,2(bis-2-propenolatomethyl)butanolato, bis(para amino benzoato-O); zirconium IV bis 2,2(bis-2-propenolatomethyl)butanolato, bis(3-mercapto)propionato-O; zirconium IV 1,1(bis-2-propenolatomethyl)butanolato, tris(2-amino)phenylato; zirconium IV 2-ethyl, 2-propenolatomethyl 1, 3-propanediolato, cyclo di 2, 2-(bis 2-propenolatomethyl) butanolato pyrophosphato-O, O; zirconium IV bis 2-ethylhexanolato, cyclo(di 2-ethylhexyl)pyrophosphate; zirconium tetra-n-propanolate; and mixtures thereof.

9. The polyaspartic composition of claim 1, wherein the zirconium metal catalyst is selected from the group consisting of zirconium IV 2,2(bis-2-propenolatomethyl)butanoloato, tris 2-methyl-2-propenolato-O; zirconium IV tetrakis (2,2-bis propenolato methyl) butanolato adduct with 2 moles bis tridecyl hydrogen phosphite; zirconium tetra-n-propanolate; and mixtures thereof.

10. A coating comprising the polyaspartic composition of claim 1.

11. A substrate having applied thereto the coating of claim 10.

12. The substrate of claim 11, wherein the substrate is selected from the group consisting of metal, plastic, wood, cement, concrete, and glass.

13. The substrate of claim 11, wherein the substrate is a floor.
